# EUROPÄISCHE PATENTSCHRIFT

(11) **EP 3 549 486 B1**
(45) Veröffentlichungstag und Bekanntmachung des Hinweises auf die Patenterteilung: **16.12.2020**
(21) Anmeldenummer: 18166035.8
(22) Anmeldetag: 06.04.2018
(51) Int. Cl.: A47B 13/06, F16B 12/30, F16B 5/02, A47B 37/00, G01N 35/00, F16B 19/02, F16B 5/06, A47B 13/16

(54) **WERKTISCH FÜR EIN LABORAUTOMATISIERUNGSSYSTEM, SOWIE LABORAUTOMATISIERUNGSSYSTEM MIT EINEM SOLCHEN WERKTISCH**
WORK TABLE FOR A LABORATORY AUTOMATION SYSTEM AND LABORATORY AUTOMATION SYSTEM INCLUDING SAID WORK TABLE
TABLE DE TRAVAIL POUR UN SYSTÈME D'AUTOMATISATION DE LABORATOIRE ET SYSTÈME D'AUTOMATISATION DE LABORATOIRE COMPRENANT LADITE TABLE

(43) Veröffentlichungstag der Anmeldung: 09.10.2019
(73) Patentinhaber: Tecan Trading AG, 8708 Männedorf (CH)
(72) Erfinder: Meier, Theo, 8634 Hombrechtikon (CH); Kuster, Martin, 8733 Eschenbach (CH)
(74) Vertreter: Qip Patentanwälte Dr. Kuehn & Partner mbB

(56) Entgegenhaltungen:
- EP-A1- 0 392 291
- WO-A1-97/26539
- US-A- 2 818 764
- US-A- 3 967 432
- US-A- 5 372 342
- US-A1- 2017 087 673

## Beschreibung

### GEBIET DER ERFINDUNG

Die Erfindung betrifft einen Werktisch für ein Laborautomatisierungssystem sowie ein Laborautomatisierungssystem mit einem Werktisch.

### HINTERGRUND DER ERFINDUNG

Laborautomatisierungssysteme werden zum Automatisieren von Tätigkeiten eines Laborassistenten verwendet. Beispielsweise können mit einem Laborautomatisierungssystem Proben pipettiert, mit Chemikalien gemischt und die dabei auftretenden Reaktionen analysiert werden.

Frei konfigurierbare Laborautomatisierungssysteme können dazu einen Werktisch aufweisen, auf dem eine Mehrzahl von Komponenten für das Laborautomatisierungssystem fixiert werden kann, wie etwa Behälter für Proben, Behälter für Pipettierspitzen, Behälter für Chemikalien, Pipettierplatten und/oder Analysegeräte. An dem Werktisch ist in der Regel ein in mehreren Dimensionen bewegbarer Pipettierarm befestigt, der beispielsweise Wegwerf-Pipettierspitzen aufnehmen kann und damit Proben bzw. Chemikalien in Aufnahmen einer Pipettierplatte pipettieren kann.

Ein Werktisch für ein Laborautomatisierungssystem weist in der Regel eine Arbeitsplatte auf, auf der die oben genannten Komponenten fixiert werden, und einen Rahmen, der die Arbeitsplatte stabilisiert und an dem der Pipettierarm befestigt sein kann. Da der Pipettierarm bzw. das äußere Ende einer Pipettierspitze unter Umständen sehr genau positioniert werden muss, kann es erforderlich sein, dass die Arbeitsplatte nahezu eben ist, beispielsweise mit einer Abweichung von weniger als einigen 1/10 mm.

In der Regel werden Profilleisten oder gewinkelte Bleche zum Aufbau des Rahmens verwendet. Die Arbeitsplatte wird dann auf Seitenflächen dieser Leisten bzw. Bleche montiert. Unebenheiten dieser Seitenflächen, die durch Fertigungsprozesse der Profilleisten bzw. durch Biegeprozesse der Bleche verursacht werden, können zu Unebenheiten der Arbeitsplatte beitragen, die dann durch aufwändige Nacharbeiten ausgeglichen werden müssen.

Die US 5 372 342 A betrifft einen Untersatz für einen Wasserkocher. Es ist gezeigt, dass der Untersatz eine Tischplatte aufweist, die durch seitliche Bohrungen an einem Trägerprofil befestigt ist.

Die EP 0 392 291 A1 zeigt ein Hängeregal, bei dem eine Deckplatte von oben mit Schrauben an einem Rahmen mit umgeknickten Profilblechen befestigt ist.

### ZUSAMMENFASSUNG DER ERFINDUNG

Es ist Aufgabe der Erfindung, einen Werktisch für ein Laborautomatisierungssystem bereitzustellen, der eine möglichst ebene Arbeitsplatte aufweist und der leicht und kostengünstig herzustellen ist.

Diese Aufgabe wird durch den Gegenstand der unabhängigen Ansprüche gelöst.

Weitere Ausführungsformen der Erfindung ergeben sich aus den abhängigen Ansprüchen und aus der folgenden Beschreibung.

Ein Aspekt der Erfindung betrifft einen Werktisch für ein Laborautomatisierungssystem. Ein Laborautomatisierungssystem kann dabei ein Gerät sein, das dazu ausgeführt ist, Pipettiervorgänge zu automatisieren. Dazu kann das Laborautomatisierungssystem mit dem Werktisch eine ebene Fläche bereitstellen, auf der Komponenten, wie Behälter und/oder Analysegeräte, abgestellt werden können. Weiter kann das Laborautomatisierungssystem einen Pipettierarm aufweisen, der beispielsweise von dem Werktisch bereitgestellt sein kann und/oder mit dem die Pipettiervorgänge durchgeführt werden. Weiter kann das Laborautomatisierungssystem ein Steuerungsgerät zum Steuern des Pipettierarms umfassen.

Der Werktisch umfasst u.a. eine Arbeitsplatte mit einer ebenen Oberfläche, ein Trägerprofil zum Stützen der Arbeitsplatte, das aus einem Blech gebogen ist, wobei das Trägerprofil eine Stirnkante bzw. Seitenkante aufweist und eine Unterseite der Arbeitsplatte direkt auf der Stirnkante aufliegt. Weiter weist das Trägerprofil wenigstens eine Aufnahmeöse auf. Ein bolzenförmiges Befestigungsmittel zum Befestigen der Arbeitsplatte an dem Trägerprofil ragt durch die Arbeitsplatte und ist in der Aufnahmeöse aufgenommen.

Die Arbeitsplatte kann aus Metall, wie etwa Stahl oder Aluminium, gefertigt sein. Eine ebene Oberfläche kann eine Oberfläche sein, die lediglich Unebenheiten von weniger als 0,5 mm aufweist bzw. weniger als 0,5 mm von einer mathematischen Ebene abweicht.

Auch das Trägerprofil kann aus Metall, insbesondere einem Metallblech bzw. Stahlblech, gefertigt sein. Ausgehend von einem nicht gebogenen Blech kann das Trägerprofil durch Biegen und/oder Schneiden des Blechs geformt werden. Um die Arbeitsplatte zu stützen, wird eine Stirnkante des Blechs bzw. des Trägerprofils verwendet. Die Stirnkante kann dabei mit der Unterseite, d.h. die der Oberfläche bzw. Oberseite gegenüberliegende Seite, in direktem Kontakt stehen.

Im Allgemeinen weist ein Blech zwei gegenüberliegende Seitenflächen und umlaufende Stirnkanten auf. Die Stirnkante des Blechs bzw. des Trägerprofils kann damit so breit wie die Dicke des Blechs sein. Die Stirnkante des Blechs bzw. des Trägerprofils kann durch Schneiden des Blechs geformt werden und/oder kann eine Schnittfläche sein.

Das Befestigungsmittel kann durch ein Loch in der Arbeitsplatte, das der Aufnahmeöse gegenüberliegt, gesteckt werden. Das Befestigungsmittel kann einen Kopf aufweisen, der die Arbeitsplatte hält, und einen Fuß, der in der Aufnahmeöse verankert ist.

Dadurch, dass die Arbeitsplatte an der Stirnkante des Trägerprofils befestigt wird, können Fertigungstoleranzen vermindert werden, da ein Blechschneideprozess, der die Stirnkante formt, geringere Fertigungstoleranzen aufweisen kann als ein Biegeprozess, mit dem beispielsweise ein Verbindungsflansch geformt werden könnte. Damit kann die Toleranz in Bezug auf Unebenheiten des Arbeitstischs, der direkt auf der Stirnkante zu liegen kommt, auf die Prozessgenauigkeit des gewählten Blechschneideprozesses reduziert werden. Der Einfluss anderer Prozesse, wie etwa eines Biegeprozesses, kann zusätzlich vermindert werden. Ein Blechschneideprozess, wie etwa Laserschneiden und/oder Stanzen, kann eine Fertigungstoleranz von weniger als 0,1 mm aufweisen, während Blechbiegeprozesse mit Abkantmaschinen Fertigungstoleranzen von mehr als 0,1 mm aufweisen können.

Gemäß einer Ausführungsform der Erfindung verläuft die Aufnahmeöse entlang eines Abschnitts bzw. Schenkels des Trägerprofils, der die Stirnkante bereitstellt. Die Aufnahmeöse kann parallel zu der Erstreckungsrichtung des Abschnitts des Trägerprofils verlaufen, der die Stirnkante bereitstellt. Weiter kann eine Achse der Aufnahmeöse in der Ebene dieses Abschnitts und/oder orthogonal zu der Arbeitsplatte verlaufen. Mit anderen Worten verläuft die Aufnahmeöse entlang der Seitenfläche des Trägerprofils. Die Achse der Aufnahmeöse kann durch eine von der Stirnkante definierte Linie entlang der Unterseite der Arbeitsplatte verlaufen.

Das Befestigungsmittel bzw. ein Fuß des Befestigungsmittels kann durch die Stirnkante bzw. durch eine von der Stirnkante definierte Linie entlang der Unterseite der Arbeitsplatte verlaufen.

Gemäß einer Ausführungsform der Erfindung ist die Aufnahmeöse durch aufgebogene Blechstreifen des Trägerprofils geformt. Die Aufnahmeöse kann dadurch geformt sein, dass das Blech des Trägerprofils im Wesentlichen parallel zu der Stirnkante bei verschiedenen Abständen zu der Stirnkante eingeschnitten wird und die entstehenden Blechstreifen bzw. Blechelemente aufgebogen werden. Die aufgebogenen Blechstreifen können abwechselnd in zwei gegenüberliegende Richtungen von dem Trägerprofil weggebogen sein. Die Blechstreifen können das Befestigungsmittel bzw. dessen Fuß von zwei Seiten umgreifen.

Gemäß einer Ausführungsform der Erfindung ist die Aufnahmeöse durch einen am Trägerprofil befestigten Einsatz bereitgestellt. In das Trägerprofil kann eine Öffnung geschnitten sein, in die der Einsatz, der aus Kunststoff hergestellt sein kann, eingesteckt ist. Der Einsatz kann beispielsweise zwei gegenüberliegende Nuten aufweisen, in die die gegenüberliegenden Seiten der Öffnung aufgenommen sind. Die von dem Einsatz bereitgestellte Aufnahmeöse kann ein Innengewinde aufweisen.

Gemäß einer Ausführungsform der Erfindung weist das Befestigungsmittel ein Gewinde auf, das in die Aufnahmeöse eingreift. Das Befestigungsmittel kann eine Schraube sein, die beispielsweise durch die Arbeitsplatte in die Aufnahmeöse geschraubt wird, und/oder einen Fuß aufweisen, der das Gewinde bereitstellt. Es ist aber auch möglich, dass das bolzenförmige Befestigungsmittel ein Niet ist, der auf andere Art und Weise in der Aufnahmeöse verankert ist.

Das Trägerprofil ist U-förmig gebogen und weist einen ersten Schenkel und einen zweiten Schenkel auf. Das Trägerprofil kann im Allgemeinen so geformt sein, dass es sich selbst versteift. Dies kann beispielsweise durch einen U-förmigen Querschnitt des Trägerprofils geschehen.

Der erste Schenkel des Trägerprofils stellt die Stirnkante bereit, die mit der Arbeitsplatte verbunden ist. Der erste Schenkel kann einen im Wesentlichen ebenen Profilabschnitt aufweisen, der an einem oberen Ende die Stirnkante trägt und/oder der auf die Arbeitsplatte zu verläuft.

Ein zweiter Schenkel des Trägerprofils läuft auf die Arbeitsplatte zu. Ein Luftspalt ist zwischen dem zweiten Schenkel und der Arbeitsplatte vorhanden. Der zweite Schenkel muss die Arbeitsplatte also nicht berühren. Der zweite Schenkel kann einen im Wesentlichen ebenen Profilabschnitt aufweisen, der auf die Arbeitsplatte zu verläuft. Im Gegensatz zum ersten Schenkel muss der zweite Schenkel aber nicht die Arbeitsplatte berühren.

Gemäß einer Ausführungsform der Erfindung ist der zweite Schenkel am auf die Arbeitsplatte zuweisenden Ende in Richtung des ersten Schenkels gebogen, so dass der Luftspalt zwischen einer Seitenfläche des Trägerprofils und der Arbeitsplatte gebildet ist. Die Stirnkante am zweiten Schenkel kann somit auf den ersten Schenkel zuweisen.

Gemäß einer Ausführungsform der Erfindung weist das Trägerprofil zwischen dem ersten Schenkel und dem zweiten Schenkel einen Bodenabschnitt auf, der quer zu dem ersten Schenkel und dem zweiten Schenkel verläuft. Insgesamt kann das Trägerprofil im Querschnitt vier Abschnitte aufweisen, die ein geöffnetes Vieleck, in etwa ein Vier- oder Fünfeck, bilden.

Gemäß einer Ausführungsform der Erfindung weist der Bodenabschnitt Löcher auf, durch die Bolzen verlaufen, an denen Füße zum Abstellen des Werktischs befestigt sind. Der Werktisch kann beispielsweise auf einem Unterbau des Laborautomatisierungssystems abgestellt sein.

Gemäß einer Ausführungsform der Erfindung ist die Stirnkante mittels eines Blechschneideprozesses begradigt. Beispielsweise kann die Stirnkante mittels eines Laserschneideprozesses oder eines Stanzprozesses begradigt sein. Auf diese Weise kann eine Fertigungstoleranz von weniger als 0,1 mm für die Stirnkante erreicht werden.

Gemäß einer Ausführungsform der Erfindung weist der Werktisch zwei parallel verlaufende Trägerprofile auf, die jeweils mit einer Stirnkante bzw. mit jeweils lediglich einer Stirnkante an der Arbeitsplatte befestigt sind. Die beiden Trägerprofile können an zwei Seitenrahmen befestigt sein, die zusammen mit den Trägerprofilen in Draufsicht einen rechteckigen Rahmen bilden, auf dem die Arbeitsplatte abgestützt ist.

Gemäß einer Ausführungsform der Erfindung weist die Arbeitsplatte Löcher auf, wobei in die Löcher Halter für Komponenten des Laborautomatisierungssystems eingesteckt sind. Die Halter können beispielsweise aus Kunststoff hergestellt sein. Die Halter können einen Kopf aufweisen, der über die Oberfläche der Arbeitsplatte ragt, und/oder können einen Fuß aufweisen, der dazu ausgeführt ist, in dem entsprechenden Loch einzurasten. Eine Komponente des Laborautomatisierungssystems kann ein Behälter für Wegwerf-Pipettierspitzen, ein Behälter für Proben, ein Behälter für Chemikalien, eine Pipettierplatte und/oder ein Analysegerät sein. Die Komponente kann an ihrer Unterseite eine Vertiefung aufweisen, die dazu ausgeführt ist, am Kopf des Halters verankert zu werden.

Gemäß einer Ausführungsform der Erfindung sind Löcher für Halter zwischen der Stirnkante und einem zweiten Schenkel des Trägerprofils angeordnet. Die Löcher können so angeordnet sein, dass sie in einen Innenraum des Trägerprofils führen.

Gemäß einer Ausführungsform der Erfindung umfasst der Werktisch weiter zwei parallel verlaufende Seitenrahmen, zu denen das Trägerprofil in einer orthogonalen Richtung verläuft und an denen das Trägerprofil mit Enden befestigt ist. Beispielsweise kann das Trägerprofil in Öffnungen in den Seitenrahmen eingesteckt sein.

Gemäß einer Ausführungsform der Erfindung umfasst der Werktisch weitereine Schiene zum Befestigen eines Pipettierarms, beispielsweise zum Tragen einer Pipettierspitze. Diese Schiene kann oberhalb der Arbeitsplatte angeordnet sein. Die Schiene kann ein Schienenprofil umfassen, das aus einem Blech gebogen ist und das mit Enden an zwei Seitenrahmen des Werktischs befestigt ist.

Gemäß einer Ausführungsform der Erfindung weist das Schienenprofil einen rechteckigen Querschnitt auf. Das Blech des Schienenprofils kann zu einem rechteckigen Querschnitt gebogen sein. Auf diese Weise kann auch die Schiene stabil und leicht ausgeführt sein.

Ein weiterer Aspekt der Erfindung betrifft ein Laborautomatisierungssystem, das einen Werktisch umfasst, so wie er oben stehend und unten stehend beschrieben ist. Weiter kann das Laborautomatisierungssystem einen Pipettierarm zusammen mit seinen Aktuatoren (wie etwa eine Pumpe, Motoren zum Bewegen des Arms usw.) und optional eine zugehörige Steuerung aufweisen.

### KURZE BESCHREIBUNG DER FIGUREN

Im Folgenden werden Ausführungsbeispiele der Erfindung mit Bezug auf die beiliegenden Figuren detailliert beschrieben.
Fig. 1 zeigt schematisch eine perspektivische Ansicht eines Laborautomatisierungssystems gemäß einer Ausführungsform der Erfindung.
Fig. 2 zeigt eine perspektivische Ansicht eines Werktischs gemäß einer Ausführungsform der Erfindung.
Fig. 3 zeigt einen Querschnitt durch den Werktisch aus der Fig. 2.
Fig. 4 zeigt einen Ausschnitt aus der Fig. 3.
Fig. 5 zeigt eine perspektivische Teilansicht eines Werktischs gemäß einer weiteren Ausführungsform der Erfindung.
Fig. 6 zeigt eine perspektivische Teilansicht eines Trägerprofils für einen Werktisch gemäß einer weiteren Ausführungsform der Erfindung.

Die in den Figuren verwendeten Bezugszeichen und ihre Bedeutung sind in zusammenfassender Form in der Liste der Bezugszeichen aufgeführt. Grundsätzlich sind identische oder ähnliche Teile mit den gleichen Bezugszeichen versehen.

### DETAILLIERTE BESCHREIBUNG VON AUSFÜHRUNGSBEISPIELEN

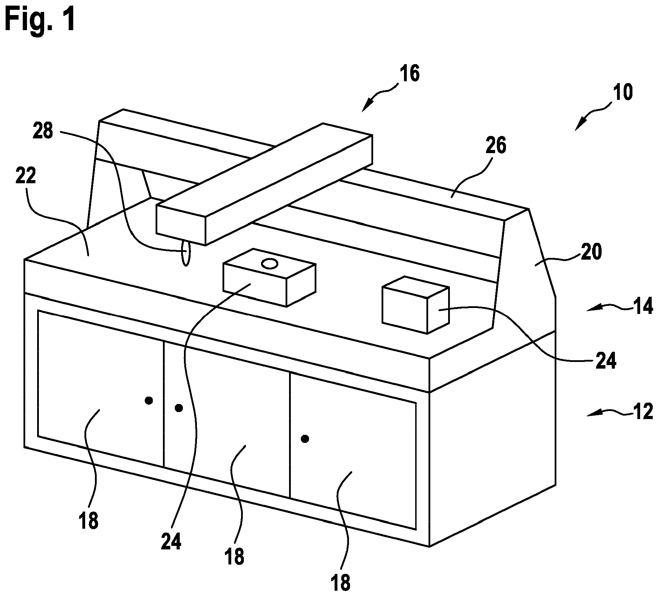

Fig. 1 zeigt ein Laborautomatisierungssystem 10, das einen Unterbau 12, einen auf dem Unterbau 12 abgestellten Werktisch 14 und einen an dem Werktisch 14 befestigten Pipettierarm 16 umfasst.

Der Unterbau 12 kann einen oder mehrere Schränke 18 umfassen und/oder kann den Werktisch 14 auf einer Höhe halten, so dass auf den Werktisch 14 angenehm von einer Bedienperson zugegriffen werden kann.

Der Werktisch 14 weist einen Rahmen 20 auf, auf dem eine Arbeitsplatte 22 befestigt ist, auf der wiederum mehrere Komponenten des Laborautomatisierungssystems 10 fixiert bzw. verankert sein können. Diese Komponenten 24 können Behälter für Wegwerf-Pipettierspitzen, Behälter für Proben, Behälter für Chemikalien, Pipettierplatten und/oder Analysegeräte sein.

Der Werktisch 14 weist weiter eine Schiene 26 auf, die über der Arbeitsplatte 22 angeordnet ist und die parallel zu der Arbeitsplatte verläuft. An dieser Schiene 26 ist der Pipettierarm 16 beweglich befestigt. Mithilfe eines oder mehrerer Motoren kann der Pipettierarm entlang der Schiene 26 bewegt werden und/oder kann eine vom Pipettierarm 16 getragene Pipettierspitze 28 in drei Dimensionen über der Arbeitsplatte 22 bewegt werden. Mit einer in das Laborautomatisierungssystem 10 integrierten Pumpe können Flüssigkeiten aus Behältern bzw. Komponenten 24 mit der Pipettierspitze 28 aspiriert und dispensiert werden.

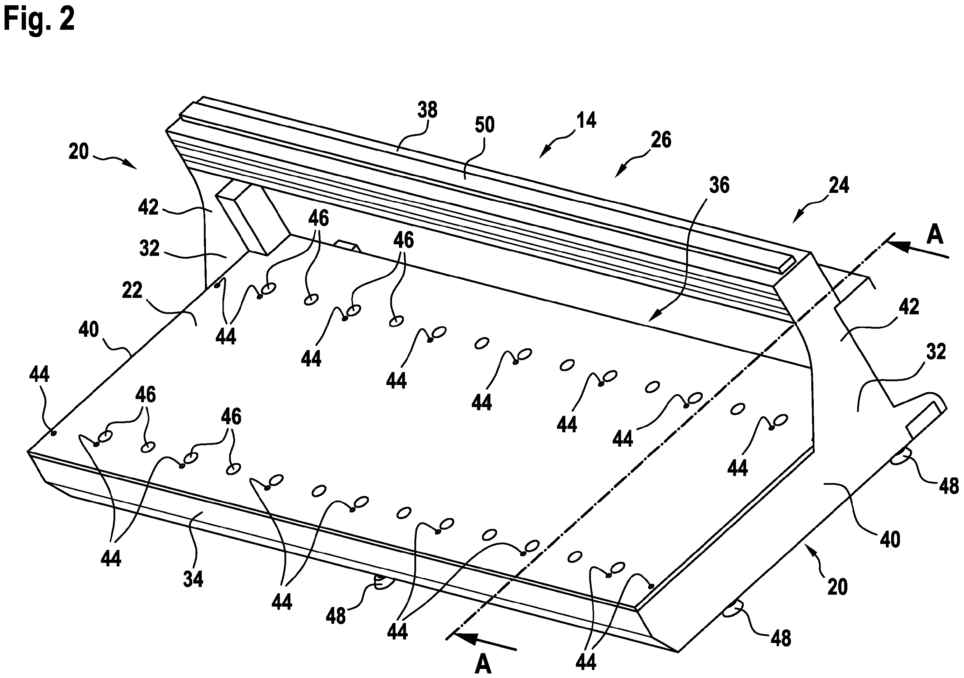

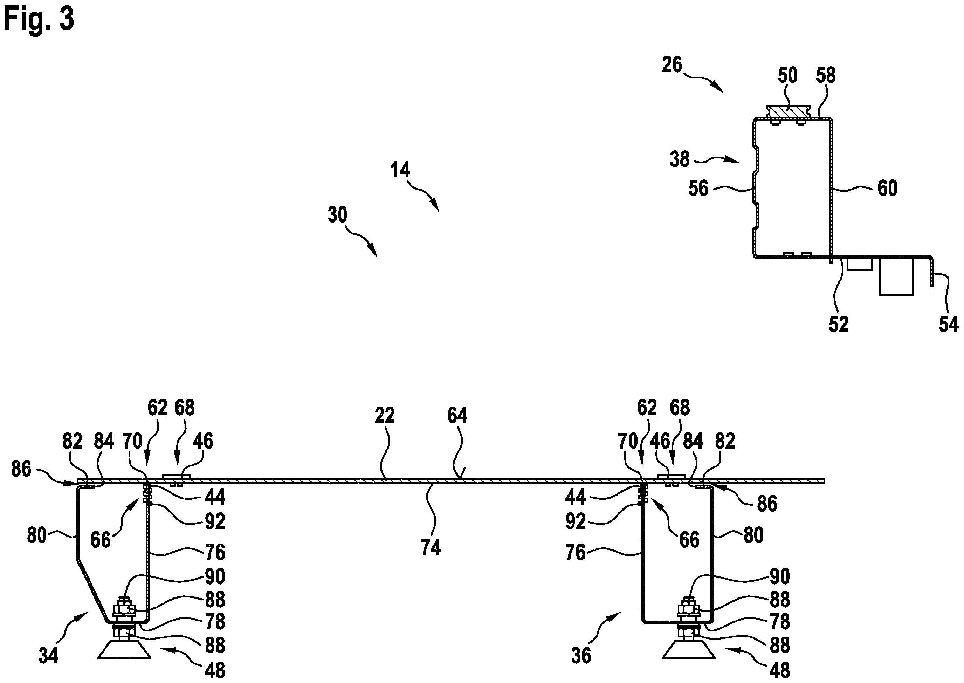

Die Fig. 2 zeigt den Werktisch 14 detaillierter. Der Rahmen 20 ist aus zwei zueinander parallel angeordneten Seitenrahmen 32, zwei parallel verlaufenden Trägerprofilen 34 und 36 (siehe auch Fig. 3) und einem Schienenprofil 38 zusammengesetzt. Die Profile 34, 36 und 38 sind mit ihren Enden mit den Seitenrahmen 32 verbunden. Beispielsweise kann in den Seitenrahmen 32 je Profil 34, 36, 38 ein Schlitz vorhanden sein, in den eine Lasche des jeweiligen Profils 34, 36, 38 gesteckt und/oder geklemmt ist. Weiter kann das Profil 34, 36, 38 mit dem Seitenrahmen mit den Seitenrahmen 32 verschweißt sein.

Das Schienenprofil 38 verläuft parallel zu den Trägerprofilen 34, 36 und ist über diesen angeordnet. Dazu ist jeder der Seitenrahmen 32 L-förmig geformt. Die Trägerprofile 34, 36 sind auf einer Höhe an einem horizontalen Schenkel 40 der Seitenrahmen 32 befestigt. Das Schienenprofil 38 ist darüber an einem vertikalen Schenkel 42 der Seitenrahmen 32 befestigt.

Die Arbeitsplatte 22 ist zwischen den Seitenrahmen 32 auf die Trägerprofile 34, 36 gelegt und mit diesen über bolzenförmige Befestigungsmittel 44 in der Form von Schrauben verbunden. Je Trägerprofil 34 sind die Befestigungsmittel 44 in einer Reihe angeordnet. Neben diesen Reihen verlaufen zwei Reihen von Haltern 46, an denen Komponenten 24 des Laborautomatisierungssystems 10 verankert werden können.

An der Unterseite jedes Trägerprofils 34, 36 sind Füße 48 angebracht, mit denen der Werktisch 14 auf dem Unterbau abgestellt werden kann. Auf dem Schienenprofil 38 der Schiene 26 ist eine Kunststoffschiene bzw. Linearführung 50 angebracht, die zum Führen des Pipettierarms 16 dient.

Die Fig. 3 zeigt einen Querschnitt durch den Werktisch 14 entlang einer Ebene senkrecht zu der Linie A-A in der Fig. 2. Das Schienenprofil 38 der Schiene 26 ist aus einem Blech zu einem rechteckigen Querschnitt gebogen. Ein horizontaler Bodenabschnitt 52 des Schienenprofils 38 weist ein umgebogenes Ende 54 auf, das nach unten weist. Am gegenüberliegenden Ende geht der Bodenabschnitt 52 in einen ersten senkrechten Wandabschnitt 56 über, der wiederum in einen horizontalen Deckenabschnitt 58 übergeht. Die Kunststoffschiene 50 ist an dem Deckenabschnitt 58 angebracht. Der Deckenabschnitt 58 geht in einen zweiten senkrechten Wandabschnitt 60 über, der mit seiner Stirnkante auf dem Bodenabschnitt 52 abgestützt ist und/oder in diesen gesteckt ist.

Die Arbeitsplatte 22 weist erste Löcher 62 auf, durch die die Befestigungsmittel 44 gesteckt sind. Die Befestigungsmittel 44 können einen Senkkopf aufweisen, der mit der Oberfläche 64 der Arbeitsplatte 22 im Wesentlichen eben ist und/oder in dieser versenkt ist. Ein Fuß der Befestigungsmittel 44 ist in einer Aufnahmeöse 66 verankert, die von dem jeweiligen Trägerprofil 34, 36 bereitgestellt ist.

Weiter weist die Arbeitsplatte 22 zweite Löcher 68 auf, in die die Halter 46 eingesteckt sind. Die Halter 46 können aus Kunststoff gefertigt sein und einen Kopf aufweisen, der über die Oberfläche 64 hinausragt und an dem Komponenten 24 (siehe Fig. 1) verankert werden können. Ein Fuß der Halter 46 kann durch einen Hinterschnitt in dem jeweiligen Loch 68 gehalten werden.

Wie das Schienenprofil 38 sind die beiden Trägerprofile 34, 36 jeweils aus einem gebogenen Blech hergestellt.

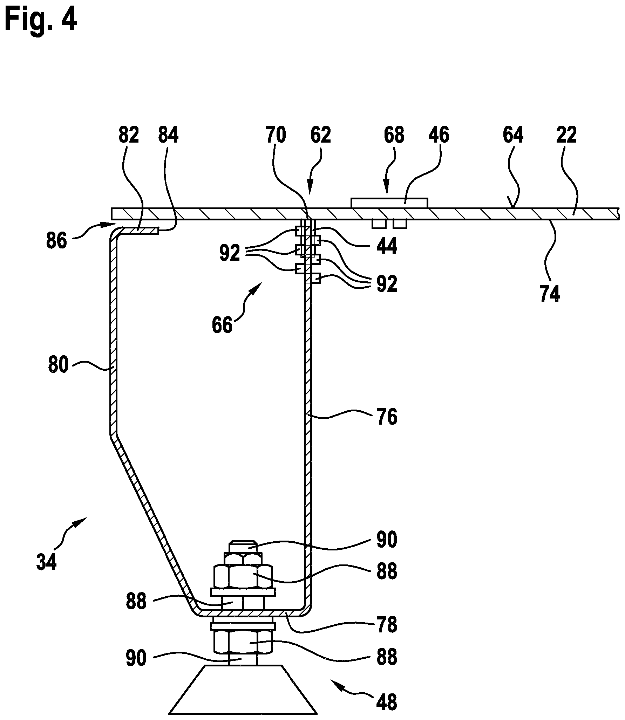

Wie auch in der Fig. 4 sichtbar ist, die einen Querschnitt des Trägerprofils 34 analog dem der Fig. 3 zeigt, liegt die Arbeitsplatte 22 auf einer Stirnkante 70 des Trägerprofils 34, 36 auf. Die Stirnkante 70 steht in direktem Kontakt mit der Unterseite 74 der Arbeitsplatte 22. Das Befestigungsmittel 44 kann dabei die Stirnkante 70 gegen die Unterseite 74 der Arbeitsplatte 22 drücken.

Die Trägerprofile 34, 36 sind U-förmig gebogen. Die Stirnkante 70, die eine Schnittkante bzw. Schnittfläche des Blechs darstellt, aus dem das jeweilige Trägerprofil 34, 36 gefertigt ist, wird an einem oberen Ende eines ersten Schenkels 76 des jeweiligen Trägerprofils 34, 36 bereitgestellt. Der erste Schenkel 76 ist im Wesentlichen vertikal angeordnet und/oder stellt an dem oberen Ende auch die Aufnahmeöse 66 bereit.

Am unteren Ende geht der erste Schenkel 76 in einen Bodenabschnitt 78 über, der horizontal orientiert ist. Der Bodenabschnitt 78 geht in einen zweiten Schenkel 80 über, der zurück in Richtung der Unterseite 74 der Arbeitsplatte 22 verläuft. Der zweite Schenkel 80 des Trägerprofils 36 verläuft dabei im Wesentlichen vertikal. Der zweite Schenkel 80 des Trägerprofils 36 umfasst zwei Abschnitte, wobei ein oberer Abschnitt vertikal und ein unterer Abschnitt schräg zu dieser Richtung verläuft.

Am oberen Ende weist der zweite Schenkel 80 einen Endabschnitt 82 auf, der in Richtung des ersten Schenkels 76 gebogen ist, so dass eine weitere Stirnkante 84 des Trägerprofils 34, 36 in Richtung des ersten Schenkels 76 weist. Der Endabschnitt 82 verläuft im Wesentlichen parallel zu der Unterseite 74 der Arbeitsplatte 22, wobei er aber nicht die Arbeitsplatte 22 berührt. Zwischen dem zweiten Schenkel 80 bzw. seinem Endabschnitt 82 und der Arbeitsplatte 22 ist ein Luftspalt 86 gebildet.

In der Fig. 3 ist weiter zu erkennen, dass die Halter 46 neben dem Trägerprofil 34 angeordnet sind, d.h. außerhalb der Schenkel 76, 80. Bei dem Trägerprofil 36 sind die Halter 46 oberhalb angeordnet, d.h. zwischen den Schenkeln 76, 80.

Die Füße 48 des Werktischs 14 sind an den Bodenabschnitten 78 der Trägerprofile 34, 36 befestigt. Dazu kann der jeweilige Bodenabschnitt 78 ein Loch aufweisen, durch das ein Bolzen 90 des Fußes 48 gesteckt und mittels einer oder mehreren Muttern 88 verschraubt ist.

Die. Fig. 3 und 4 zeigen, dass sich die Achse der Aufnahmeöse 66 parallel zu der Erstreckungsrichtung des Blechs bzw. des ersten Schenkels 76 des Trägerprofils 34, 36 erstreckt. Das Befestigungsmittel 44 ist zentriert zu dem Blech bzw. dem ersten Schenkel 76 angeordnet.

Bei den Fig. 3 und 4 ist die Aufnahmeöse 66 aus Blechstreifen 92 gebildet, die von der Achse der Aufnahmeöse 66 und/oder einer Erstreckungsebene des Trägerprofils 34, 36 weggebogen sind.

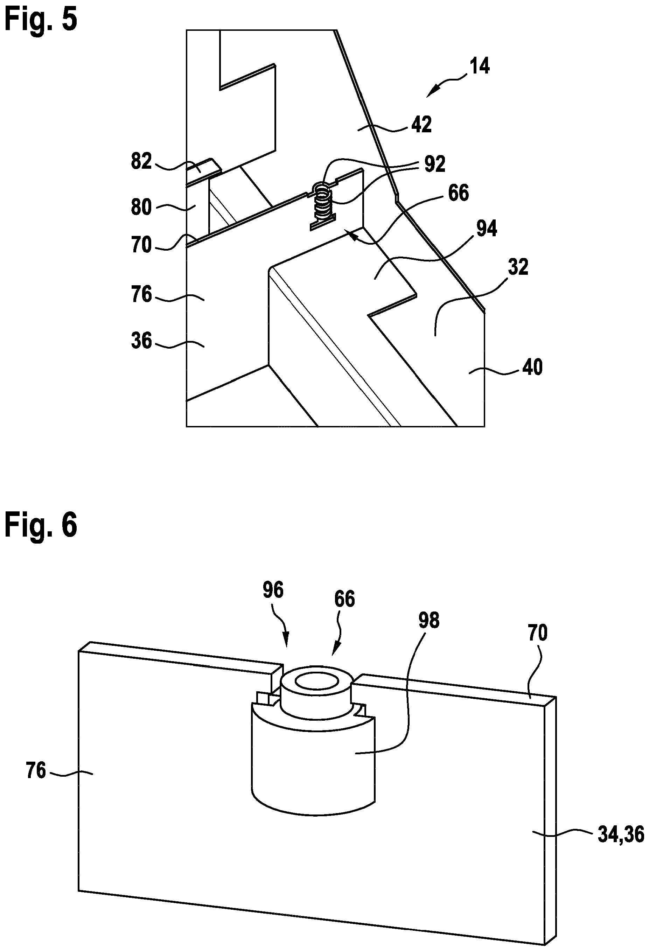

In der Fig. 5 ist ein Ausschnitt einer Ausführungsform eines Werktischs 14 gezeigt, bei dem die Aufnahmeöse 66 auch aus aufgebogenen Blechstreifen 92 gebildet ist. Eine derartige Aufnahmeöse 66 kann beispielsweise mit einem Zangenwerkzeug, das gleichzeitig die Schlitze zwischen den Blechstreifen 92 schneidet und die Blechstreifen 92 biegt, erzeugt werden.

In der Fig. 5 ist zu erkennen, dass der der Unterseite 74 der Arbeitsplatte 22 am nächsten liegende Blechstreifen 92 einen Abstand zu dieser Unterseite 74 aufweisen kann. Weiter ist gezeigt, dass der Werktisch neben den Seitenrahmen 32 und den Profilen 34, 36 weitere Verstrebungen 94 zur Stabilisierung aufweisen kann, die durch einen Schlitz in dem Profil 36 verlaufen können.

Die Fig. 6 zeigt eine weitere Ausführungsform einer Aufnahmeöse 66, bei der in dem Trägerprofil an der Stirnkante 70 eine Öffnung 96 mit zwei parallelen Seiten gebildet ist, in die ein Einsatz 98 eingeschoben ist. Der Einsatz 98 kann zwei parallele Nuten aufweisen, in denen die Seiten der Öffnung aufgenommen sind und die den Einsatz 98 am Drehen hindern. Der Einsatz 98 kann aus Kunststoff gefertigt sein und/oder eine Aufnahmeöse 66 bereitstellen, deren Achse parallel zu einer Erstreckungsrichtung des Blechs des Trägerprofils 34 36 verläuft.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### LISTE DER BEZUGSZEICHEN

- 10: Laborautomatisierungssystem
- 12: Unterbau
- 14: Werktisch
- 16: Pipettierarm
- 18: Schrank
- 20: Rahmen
- 22: Arbeitsplatte
- 24: Komponente
- 26: Schiene
- 28: Pipettierspitze
- 32: Seitenrahmen
- 34: vorderes Trägerprofil
- 36: hinteres Trägerprofil
- 38: Schienenprofil
- 40: horizontaler Schenkel
- 42: vertikaler Schenkel
- 44: Befestigungsmittel
- 46: Halter
- 48: Fuß
- 50: Kunststoffschiene
- 52: Bodenabschnitt
- 54: umgebogenes Ende
- 56: Wandabschnitt
- 58: Deckenabschnitt
- 60: Wandabschnitt
- 62: erstes Loch
- 64: Oberfläche
- 66: Aufnahmeöse
- 68: zweites Loch
- 70: Stirnkante
- 74: Unterseite
- 76: erster Schenkel
- 78: Bodenabschnitt
- 80: zweiter Schenkel
- 82: Endabschnitt
- 84: Stirnkante
- 86: Luftspalt
- 88: Mutter
- 90: Bolzen
- 92: Blechstreifen
- 94: Verstrebung
- 96: Öffnung
- 98: Einsatz

## Patentansprüche

1. Werktisch (14) für ein Laborautomatisierungssystem (10), der Werktisch (14) umfassend:
eine Arbeitsplatte (22) mit einer ebenen Oberfläche (64);
ein Trägerprofil (34, 36) zum Stützen der Arbeitsplatte (22), das aus einem Blech gebogen ist;
wobei das Trägerprofil (34, 36) eine Stirnkante (70) aufweist, wobei eine Unterseite (74) der Arbeitsplatte (22) direkt auf der Stirnkante (70) aufliegt;
wobei das Trägerprofil (34, 36) wenigstens eine Aufnahmeöse (66) aufweist;
wobei ein bolzenförmiges Befestigungsmittel (44) zum Befestigen der Arbeitsplatte (22) an dem Trägerprofil (34, 36) durch die Arbeitsplatte (22) ragt und in der Aufnahmeöse (66) aufgenommen ist;
wobei das Trägerprofil (34, 36) U-förmig gebogen ist, wobei ein erster Schenkel (76) des Trägerprofils (34, 36) die Stirnkante (70) bereitstellt, die mit der Arbeitsplatte (22) verbunden ist;
wobei ein zweiter Schenkel (80) des Trägerprofils (34, 36) auf die Arbeitsplatte (22) zuläuft und ein Luftspalt (86) zwischen dem zweiten Schenkel (80) und der Arbeitsplatte (22) vorhanden ist.

2. Werktisch (14) nach Anspruch 1,
wobei die Aufnahmeöse (66) entlang eines Abschnitts (76) des Trägerprofils (34, 36) verläuft, der die Stirnkante bereitstellt.

3. Werktisch (14) nach Anspruch 1 oder 2,
wobei die Aufnahmeöse (66) durch aufgebogene Blechstreifen (92) des Trägerprofils (34, 36) geformt ist; oder
wobei die Aufnahmeöse (66) durch einen am Trägerprofil (34, 36) befestigten Einsatz (98) bereitgestellt ist.

4. Werktisch (14) nach einem der vorhergehenden Ansprüche,
wobei das Befestigungsmittel ein Gewinde aufweist, das in die Aufnahmeöse eingreift.

5. Werktisch (14) nach einem der vorhergehenden Ansprüche,
wobei der zweite Schenkel (80) am auf die Arbeitsplatte (22) zuweisenden Ende (82) in Richtung des ersten Schenkels (76) gebogen ist, so dass der Luftspalt (86) zwischen einer Seitenfläche des Trägerprofils (34, 36) und der Arbeitsplatte (22) gebildet ist.

6. Werktisch (14) nach einem der vorhergehenden Ansprüche,
wobei das Trägerprofil (34, 36) zwischen dem ersten Schenkel (76) und dem zweiten Schenkel (80) einen Bodenabschnitt (78) aufweist, der quer zu dem ersten Schenkel (76) und dem zweiten Schenkel (80) verläuft.

7. Werktisch (14) nach Anspruch 6,
wobei der Bodenabschnitt (78) Löcher aufweist, durch die Bolzen (90) verlaufen, an denen Füße (48) zum Abstellen des Werktischs (14) befestigt sind.

8. Werktisch (14) nach einem der vorhergehenden Ansprüche,
wobei die Stirnkante (70) mittels eines Blechschneideprozesses begradigt ist; und/oder
wobei die Stirnkante (70) mittels eines Laserschneideprozesses begradigt ist.

9. Werktisch (14) nach einem der vorhergehenden Ansprüche,
wobei der Werktisch (14) zwei parallel verlaufende Trägerprofile (34, 36) aufweist, die jeweils mit einer Stirnkante (70) an der Arbeitsplatte (22) befestigt sind.

10. Werktisch (14) nach einem der vorhergehenden Ansprüche,
wobei die Arbeitsplatte (22) Löcher (68) aufweist;
wobei in die Löcher (68) Halter (46) für Komponenten (24) des Laborautomatisierungssystems (10) eingesteckt sind.

11. Werktisch (14) nach einem der vorhergehenden Ansprüche,
wobei Löcher (68) für Halter (46) zwischen der Stirnkante (70) und einem zweiten Schenkel (76) des Trägerprofils (36) angeordnet sind.

12. Werktisch (14) nach einem der vorhergehenden Ansprüche, weiter umfassend:
zwei parallel verlaufende Seitenrahmen (32), zu denen das Trägerprofil (34, 36) in einer orthogonalen Richtung verläuft und an denen das Trägerprofil (34, 36) mit Enden befestigt ist.

13. Werktisch (14) nach einem der vorhergehenden Ansprüche, weiter umfassend:
eine Schiene (26) zum Befestigen eines Pipettierarms (16);
wobei die Schiene (26) ein Schienenprofil (38) umfasst, das aus einem Blech gebogen ist und das mit Enden an zwei Seitenrahmen (32) des Werktischs (14) befestigt ist.

14. Werktisch (14) nach Anspruch 13,
wobei das Schienenprofil (38) der Schiene (26) einen rechteckigen Querschnitt aufweist.

15. Laborautomatisierungssystem (10), umfassend:
einen Werktisch (14) nach einem der vorhergehenden Ansprüche.

## Claims

1. Worktable (14) for a laboratory automation system (10), the worktable (14) comprising:
a worktop (22) having a planar surface (64);
a carrier profile (34, 36), which is bent from a metal sheet, for supporting the worktop (22);
wherein the carrier profile (34, 36) has an end edge (70), a lower face (74) of the worktop (22) being positioned directly on the end edge (70);
wherein the carrier profile (34, 36) has at least one receiving eye (66);
wherein a bolt-shaped fixing means (44) for fixing the worktop (22) on the carrier profile (34, 36) projects through the worktop (22) and is received in the receiving eye (66);
wherein the carrier profile (34, 36) is curved in a U shape, a first limb (76) of the carrier profile (34, 36) providing the end edge (70) which is connected to the worktop (22);
wherein a second limb (80) of the carrier profile (34, 36) tapers towards the worktop (22), and there is a gap (86) between the second limb (80) and the worktop (22).

2. Worktable (14) according to claim 1,
the receiving eye (66) extending along a portion (76), which provides the end edge, of the carrier profile (34, 36).

3. Worktable (14) according to either claim 1 or claim 2,
wherein the receiving eye (66) is formed by bent-up sheet metal strips (92) of the carrier profile (34, 36); or wherein the receiving eye (66) is provided by an insert (98) fixed on the carrier profile (34, 36).

4. Worktable (14) according to any of the preceding claims,
wherein the fixing means has a thread which engages in the receiving eye.

5. Worktable (14) according to any of the preceding claims,
wherein the second limb (80) is bent, at the end (82) facing the worktop (22), in the direction of the first limb (76), in such a way that the gap (86) is formed between a side face of the carrier profile (34, 36) and the worktop (22).

6. Worktable (14) according to any of the preceding claims,
wherein the carrier profile (34, 36) has, between the first limb (76) and the second limb (80), a base portion (78) which extends transverse to the first limb (76) and to the second limb (80).

7. Worktable (14) according to claim 6,
wherein the base portion (78) has holes, through which bolts (90) extend, on which feet (48) for setting the worktable (14) down are fixed.

8. Worktable (14) according to any of the preceding claims,
wherein the end edge (70) is straightened by a sheet metal cutting process; and/or
wherein the end edge (70) is straightened by a laser cutting process.

9. Worktable (14) according to any of the preceding claims,
wherein the worktable (14) has two carrier profiles (34, 36), which extend parallel and an end edge (70) of each of which is fixed to the worktop (22).

10. Worktable (14) according to any of the preceding claims,
wherein the worktop (22) has holes (68);
wherein holders (46) for components (24) of the laboratory automation system (10) are plugged into the holes (68).

11. Worktable (14) according to any of the preceding claims,
wherein holes (68) for holders (46) are arranged between the end edge (70) and a second limb (76) of the carrier profile (36) .

12. Worktable (14) according to any of the preceding claims, further comprising:
two side frames (32), which extend parallel, with respect to which the carrier profile (34, 36) extends in an orthogonal direction, and on which ends of the carrier profile (34, 36) are fixed.

13. Worktable (14) according to any of the preceding claims, further comprising:
a rail (26) for fixing a pipetting arm (16);
wherein the rail (26) comprises a rail profile (38), which is bent from a metal sheet and ends of which are fixed to two side frames (32) of the worktable (14).

14. Worktable (14) according to claim 13,
wherein the rail profile (38) of the rail (26) has a rectangular cross section.

15. Laboratory automation system (10), comprising:
a worktable (14) according to any of the preceding claims.

## Revendications

1. Table de travail (14) pour un système d'automatisation de laboratoire (10), la table de travail (14) comprenant :
un plan de travail (22) doté d'une surface (64) plane ;
un profilé support (34, 36) pour soutenir le plan de travail (22), qui est plié à partir d'une tôle ;
dans laquelle le profilé support (34, 36) comporte un bord frontal (70), une face inférieure (74) du plan de travail (22) reposant directement sur le bord frontal (70) ;
dans laquelle le profilé support (34, 36) comporte au moins un anneau de réception (66) ;
dans laquelle un moyen de fixation (44) en forme de boulon pour la fixation du plan de travail (22) au profilé support (34, 36) dépasse à travers le plan de travail (22) et est reçu dans l'anneau de réception (66) ;
dans laquelle le profilé support (34, 36) est plié en forme de U, un premier côté (76) du profilé support (34, 36) fournissant le bord frontal (70), qui est relié au plan de travail (22) ;
dans laquelle un second côté (80) du profilé support (34, 36) s'étend vers le plan de travail (22) et un interstice (86) se trouve entre le second côté (80) et le plan de travail (22).

2. Table de travail (14) selon la revendication 1,
dans laquelle l'anneau de réception (66) s'étend le long d'une partie (76) du profilé support (34, 36), qui fournit le bord frontal.

3. Table de travail (14) selon la revendication 1 ou 2,
dans laquelle l'anneau de réception (66) est formé par des bandes de tôle (92) dépliées du profilé support (34, 36) ; ou dans laquelle l'anneau de réception (66) est fourni par une pièce rapportée (98) fixée au profilé support (34, 36).

4. Table de travail (14) selon l'une des revendications précédentes,
dans laquelle le moyen de fixation comporte un filetage, qui vient en prise dans l'anneau de réception.

5. Table de travail (14) selon l'une des revendications précédentes,
dans laquelle le second côté (80) est plié, à l'extrémité (82) orientée vers le plan de travail (22), en direction du premier côté (76), de telle sorte que l'interstice (86) entre une surface latérale du profilé support (34, 36) et le plan de travail (22) est formé.

6. Table de travail (14) selon l'une des revendications précédentes,
dans laquelle le profilé support (34, 36) comporte, entre le premier côté (76) et le second côté (80), une partie de fond (78), qui s'étend transversalement au premier côté (76) et au second côté (80).

7. Table de travail (14) selon la revendication 6,
dans laquelle la partie de fond (78) comporte des trous, à travers lesquels s'étendent des boulons (90), auxquels sont fixés des pieds (48) pour déposer la table de travail (14).

8. Table de travail (14) selon l'une des revendications précédentes,
dans laquelle le bord frontal (70) est redressé par un processus de coupe de tôle ; et/ou
dans laquelle le bord frontal (70) est redressé par un processus de coupe au laser.

9. Table de travail (14) selon l'une des revendications précédentes,
dans laquelle la table de travail (14) comporte deux profilés support (34, 36) s'étendant en parallèle, qui sont respectivement fixés au plan de travail (22) avec un bord frontal (70).

10. Table de travail (14) selon l'une des revendications précédentes,
dans laquelle le plan de travail (22) comporte des trous (68) ;
dans laquelle des supports (46) pour des composants (24) du système d'automatisation de laboratoire (10) sont introduits dans les trous (68).

11. Table de travail (14) selon l'une des revendications précédentes,
dans laquelle des trous (68) pour des supports (46) sont disposés entre le bord frontal (70) et un second côté (76) du profilé support (36).

12. Table de travail (14) selon l'une des revendications précédentes, comprenant en outre :
deux cadres latéraux (32) s'étendant en parallèle, par rapport auxquels le profilé support (34, 36) s'étend dans une direction orthogonale et auxquels le profilé support (34, 36) est fixé par des extrémités.

13. Table de travail (14) selon l'une des revendications précédentes, comprenant en outre :
un rail (26) pour la fixation d'un bras de pipetage (16) ;
dans laquelle le rail (26) comprend un profilé de rail (38), qui est plié à partir d'une tôle et qui est fixé par des extrémités à deux cadres latéraux (32) de la table de travail (14) .

14. Table de travail (14) selon la revendication 13,
dans laquelle le profilé de rail (38) du rail (26) comporte une section transversale rectangulaire.

15. Système d'automatisation de laboratoire (10), comprenant :
une table de travail (14) selon l'une des revendications précédentes.
